(19) Europäisches Patentamt
European Patent Office
Office européen des brevets

(11) **EP 2 660 209 A1**

(12) **EUROPEAN PATENT APPLICATION**

(43) Date of publication:
**06.11.2013 Bulletin 2013/45**

(51) Int Cl.:
*C02F 11/12* (2006.01)  *C02F 11/14* (2006.01)

(21) Application number: **13165970.8**

(22) Date of filing: **30.04.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **04.05.2012 IT MI20120746**

(71) Applicant: **R.E.M. S.R.L.**
**42025 Cavriago (Reggio Emilia) (IT)**

(72) Inventor: **Lirici, Matteo**
**42025 Cavriago (Reggio Emilia) (IT)**

(74) Representative: **Biggi, Cristina**
**c/o Bugnion S.p.A.**
**Viale Lancetti 17**
**20158 Milano (IT)**

(54) **Industrial process for the preparation of inert mud aggregates**

(57) The present invention refers to an industrial process for converting spent sludge utilized in water purification, into inert material with a low moisture content, by means of the use of lime (CaO). The process is characterised by the fact that the addition of lime occurs at a ratio by weight ranging between 1:1 and 4:1, with respect to the amount of dry matter contained in the sludge obtained from Step A, so as to reach and maintain a constant temperature ranging between 100 and 110 °C, until obtaining a residual water content of less than or equal to 10%.

Fig.1

## Description

The present invention refers to a process for converting sludge obtained as a waste product in water purification, into inert material with a low moisture content, by means of the use of lime (CaO).

Background art

Most treatments for the purification of industrial or public water provide for the use of organic material (commonly called sludge), which makes it possible to obtain water that is improved in terms of purity and appearance. Sludges commonly utilized for such purposes are mainly of biological origin and are principally constituted by mixtures of microorganisms, such as for example enzymes and/or bacteria.

One problem relating to the use of sludge in water purification is, however, represented by spent sludge, that is, the sludge remaining at the end of the process as a by-product. In fact, said spent sludge is principally constituted by the sludge remaining upon completion of purification, and that has internally absorbed most of the impurities and the pollutants originally present in the water entering the purification plant. Spent sludge is obtained as a by-product of purification plants by means of biological processes (that is, aerobic and anaerobic processes) and physical-chemical processes. For disposal, the sludge must undergo further treatments, typically thermal treatments, for the purpose of converting it into an inert material that can thus be eliminated in accordance with current legislation.

In this regard, the process of inertization of the above-mentioned spent sludge comprises a drying step by means of the use of dryers that can operate at both high and low temperatures. In the first case, the temperatures are usually higher than 300 °C, whereas in the second case, although the temperatures are generally lower than 100 °C, the installation and operating costs of the respective plants are often high.

The need thus remains to find a process for disposal of the spent sludge obtained as by-products from water purification plants that is of easy industrial realization and that provides advantageous conditions in terms of costs and consumption.

We have now found a process for the thermal degradation of said spent sludge into inert sludge by means of the use of lime, a process that can be advantageously realized in an industrial plant that is easily designed, has low maintenance costs and permits continuous processing.

Summary of the invention

The present invention thus refers to a process for the preparation of inert sludge that comprises the steps of:

A. partial dehydration of the spent sludge resulting from water purification processes of a biological or physical-chemical type;

B. treatment of the sludge obtained from step A with lime, until obtaining a residual water content of less than or equal to 10% by weight.

In a further aspect, the invention refers to the use of lime for converting sludge derived from aerobic, anaerobic or physical-chemical purification processes into inert material, preferably by means of the process of the present invention.

In an additional aspect, the invention concerns a plant for the continuous conversion of spent sludge derived from public and/or industrial water purification processes into inert sludge, comprising: at least one dehydration unit (1) of the incoming spent sludge, connected to at least one mixer (2) that is preferably insulated and which is connected to at least one batcher (3) and to at least one collecting bin (4), in which said dehydration unit (1), mixer (2), batcher (3) and collecting bin (4) are connected each other by means of conveying means (5)(6)(7).

Description of the Figure

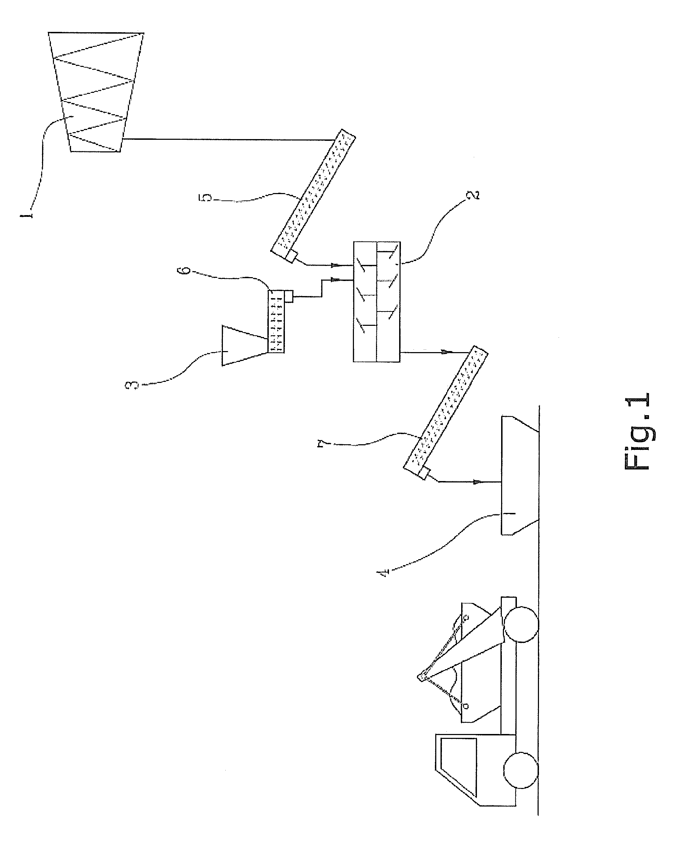

Figure 1 represents a schematic illustration of a possible industrial plant for the realization of the present process for continuous processing, in which:

(1): dehydration unit (centrifuge)
(2): insulated mixer (plough type)
(3): lime batcher
(4): inert sludge collecting bin
(5)(6)(7): conveying means.

Detailed description

"Sludge" or "sludgy material" is intended as an organic material commonly utilized in aerobic or anaerobic processes for the purification of water, both public and industrial, and typically comprising microorganisms, bacteria and/or enzymes.

"Spent sludge" or "spent sludgy material" is intended as the sludge that remains as a by-product upon completion of the normal aerobic or anaerobic biological processes of (public or industrial) water purification, and that has a water content at least greater than 90% by weight. "Inert sludgy material", "inert sludge" or "inertized sludge" is intended as a material having a residual water content of less than 10% by weight (the content expressed by percentage by weight is intended as the amount of water with respect to the total weight of the sludgy material, as determined for example by means of the procedure described in the method of BS EN 12880:2000, *"Characterisation of sludges. Determination of dry residue and water content",* European Committee for Standardisation).

As mentioned above, the present invention refers to a process for the thermal degradation of spent sludge, that is, from water purification processes, by means of the use of lime. The inert sludge thus obtained can be easily disposed, without further processing, or even recycled for example as filler in cement compositions.

In particular, the invention refers to a process for converting spent sludge from aerobic and/or anaerobic or physical-chemical water purification processes into inert sludge, said process comprising a first partial dehydration treatment (Step A) of the spent sludge remaining upon completion of a process of water purification, followed by the reaction with lime (Step B), for the purpose of obtaining a material having a water content of less than or equal to 10% by weight, preferably less than or equal to 6%.

Step A, i.e. partial dehydration, is needed in order to prepare the sludge for inertization in the subsequent treatment with lime, according to Step B. In fact, given the exothermic nature of the reaction between lime and water, and given the high water content of spent sludge (equal to about 95-99% by weight of the entire material), the partial dehydration step is needed in order to reduce the percentage of water in the sludge to levels that permit the treatment with lime in Step B in a controlled and safer manner.

Therefore, in one embodiment of the invention, the partial dehydration of Step A may take place by means of a mechanical process that provides for the use of a mechanical dehydration unit, preferably selected from among: belt presses, filter presses and centrifuges. Preferably, said step is carried out by means of the use of a centrifuge.

In practice, the spent sludge, obtained for example from a process for purifying industrial water and generally having a water content of about 95-99% by weight of the entire material, is supplied to the mechanical dehydration unit at a loading rate ranging for example between 5 and 500 Kg/hour, preferably ranging between 150 and 250 Kg/hour. In a preferred embodiment, the partial dehydration step makes it possible to obtain material exiting the dehydration unit, preferably a centrifuge, with a water content that is lower than 90%, preferably ranging between 75 and 85%, still more preferably, ranging between 65 and 70% by weight. In other words, the material exiting the dehydration unit has a dry matter content (intended as the weight of the material excluding water) of at least 10%, preferably ranging between 15 and 40%, more preferably between 15 and 25% and still more preferably ranging between 30 and 35% by weight. The percentage of residual water (and the corresponding percentage of dry matter) can be measured by means of the method of BS EN12880:2000, *"Characterisation of sludges. Determination of dry residue and water content",* European Committee for Standardisation, and principally depend on the type of incoming spent sludge (for example public or industrial) and the initial percentage of water thereof.

The partial dehydration Step A generally takes place at ambient temperature (that is, at a temperature ranging between 15° C and 35° C) for an frame of time depending on, for example, the percentage of residual water that one wants to obtain in the material exiting the dehydration unit.

Upon completion of this step, the exiting sludgy material is then treated with lime or calcium oxide (CaO, CAS No. 1305-78-8) according to Step B of the present invention. Preferably, Step B takes place under controlled temperature conditions, in such a manner as to reduce the percentage of residual water to a level at which the end material can be considered inert and therefore disposable. In a preferred aspect, the material obtained from Step A is transferred from the dehydration unit to a mixer that is generally thermally isolated, and to which lime is added. In fact, it has unexpectedly been found that the addition of lime in specific amounts can lead to obtaining an inert end product, having a low content of residual water (less than or equal to 10%), and that can be taken from the plant and disposed of directly without further purification or abatement steps. Preferably, said mixer is selected from among: a plough-type mixer or an immersion mixer of a planetary type; the mixer is preferably a thermally isolated or thermally insulated plough-type mixer. Lime is available on the market (for example from UNICALCE SPA) and can be purchased and utilized as is, without pre-treatments or additional processing. By making use of the exothermic characteristics of the reaction between the lime and water, it is possible during Step B to raise the temperature of the partially dehydrated sludge and spontaneous trigger the process of water evaporation until reaching a final water content of less than or equal to 10%, preferably less than or equal to 6% by weight. In an additional, preferred aspect, the lime is added gradually and the rate and agitation thereof are such that the temperature, initially within the range of 15 °C to 35 °C, reaches a value of at least 90 °C, as measured for example by means of a PT100-type of temperature sensor, inside the mixing chamber of the mixer. Advantageously, the rate of agitation of the mixer ranges between 50 and 150 rpm, more preferably between 80 and 130 rpm. Preferably, the lime is added into the mixer until a constant temperature of at least 100 °C is reached, said constant temperature preferably ranging between 100 °C and 110 °C, still more preferably between 100 °C and 105 °C. Once the desired temperature is reached, the rate at which lime continues to be added is such that the temperature of the treated sludge remains constant during the treatment. Preferably, the rate at which the lime is added is within the range of 50 Kg/hour to 1000 Kg/hour, according to the flow rate and content of dry matter of the partially dewatered sludge. The treatment with lime is prolonged until no further increase in the temperature of the treated material is observed. In fact, the increase in temperature with respect to the constant value reached while the lime is being added is indicative of a residual content of water of less than about 10% by weight in the sludge, and thus indicates completion of the process of conversion of the spent sludge into inert material according to the process of the invention. The lime is preferably added with a ratio by weight within the range of at least 1:1 to 4:1, preferably with a ratio within the range of 1:1 to 2:1, with respect to the amount of dry matter, intended as the weight of the material, excluding water, present in the sludge exiting the dehydration unit. By way of example, when the content of dry matter in the partially dewatered sludge following Step A amounts to about 35%, the lime is added at a ratio of 1:1 (lime/dry matter), whereas when the content of dry matter amounts to about 15%, the ratio of lime/dry matter is about 2:1.

In a particularly preferred aspect, the material that is partially dehydrated and that has a percentage of residual water ranging between 20 and 25%, is treated with lime at a ratio of 1.5:1, with a constant temperature ranging between 100 °C and 105 °C, for an interval of time ranging between 8 and 15 minutes, until there is a residual water content of less than 6%. During the step in which lime is added, the pH of the partially dewatered sludgy material is generally greater than 10, preferably ranging between 10 and 12. Advantageously, the water that evaporates from the sludgy material due to the exothermic nature of the reaction can be disposed of as simple, non-toxic water vapour and that thus does not require particular neutralization or purification treatment. Furthermore, the heat developed can be utilized as a thermal energy source, e.g. by means of processes known in the field. Upon completion of the thermal degradation process of the present invention, the material that is obtained comprises inert sludge (that is, having a water content of less than or equal to 10%), in which the calcium hydroxide $(Ca(OH)_2)$ produced by the reaction of lime (CaO) with water, is absorbed. Preferably, the inert material obtained with the process of the present invention has a water content of less than or equal to 6%, more preferably in the range of 3-5%, still more preferably of less than 3%, which is measurable for example by means of a procedure indicated in the standard EN12880:2000. Advantageously, the inert material obtained with the thermal degradation process of the present invention is stable (even for years), completely inactive and it can be disposed or even recycled for example as an additive material or as filler for building materials, including asphalt and cements. Moreover, the present process can be easily adapted in industrial plants for continuous processing, for example as illustrated schematically in a preferred embodiment in Figure 1. In fact, the realization of a corresponding industrial scale process proves to be particularly convenient in that the system is characterized by simple maintenance, has low environmental impact and, by virtue of the possibility of continuous processing, it makes it possible to optimize time and quantities of raw materials that can be employed. Furthermore, excluding the inert sludge and the water vapour, the present process does not produce any by-products (such as toxic or noxious fumes or residues) necessitating further treatments for the disposal thereof. Lastly, the low plant costs, together with the advantages cited above, make the present invention a valid alternative to the industrial processes currently in use for the preparation of inert material starting from spent sludge from water purification plants.

In a further aspect, the invention refers to the use of lime for converting sludge derived from aerobic, anaerobic or physical-chemical purification processes into inert material. In particular, the invention refers to the use of lime in a process for the preparation of inert sludge as described hereinabove.

In an additional aspect, the invention refers to an industrial plant for the realization of the process of the invention for continuous processing. This plant, which is described in a preferred embodiment in Figure 1, comprises at least one apparatus for the partial mechanical dehydration (dehydration unit) (1) of the incoming spent sludge, said apparatus being connected to a preferably thermally isolated or insulated mixer (2), in which the material exiting the dehydration unit (1) is transferred, and in which the lime is added by means of a specific batcher (3). The obtained inert material, or inertized sludge, (which has an amount of residual water of less than 10% by weight) is then cooled and collected in a collecting bin (4) and then disposed. The various elements of the plant (for example the centrifuge, the mixer and the batcher) are connected one to the other by means of conveying elements (5) (6) (7), such as conveyor belts, Archimedes screws or the like. Preferably, the dehydration unit (1) is selected from: a centrifuge, a belt press or filter press, preferably a centrifuge. The mixer (2) is preferably selected from: a plough-type mixer or an immersion mixer of a planetary type. Preferably, the plant of the invention comprises at least one centrifuge, connected to at least one plough-type mixer, to which a batcher for the lime is connected. As can be noted, the plant for the realization of the process of the invention for continuous processing is characterized by low energy and environmental impact as it comprises simple equipments commonly utilized industrially, and it does not produce toxic or noxious by-products.

The present invention shall now be described in the following experimental part, which is not intended to limit the scope thereof.

EXPERIMENTAL PART

Example 1: batch trial of the thermal degradation process of the invention.

The following experiments were carried out in a discontinuous batch system. In the continuous process, the operating conditions may be further optimized, in that, for example, there are no temperature transients occurring in the batch process.

In a container having a capacity of 25 litres, a known amount of sludge (3.5 kg) was introduced; the water content (and the corresponding dry matter) of said sludge was predetermined according to standard EN 12880:2000. The content of dry matter proved to be equal to 23.8%.

The amount of lime was therefore determined in proportion to the ratio of 1.5:1 as:

$$CaO = 3.5 \times 0.238 \times 1.5 = 1.25 \text{ kg.}$$

The mixture was then agitated with a planetary-type immersion mixer for 5 minutes and allowed to rest for another 7 minutes in order to complete the reaction. While the lime was being added, there was a gradual increase in the temperature of the mass up to 50 °C during mixing and a gradual increase up to 100 °C in the subsequent evaporation step. The temperature remained constant until complete evaporation. The evaporation step lasted 5 minutes.

At the end of the trial and with the temperature reduced to 40 °C, the weight of the mixture obtained was determined as being equal to 4.0 kg with a resulting decrease in weight of 0.75 kg, that is, 21.4% of the amount of the initial sludge.

The next check regarding the amount of water contained in the sludge upon completion of the process showed a content equal to 7% of the final mixture.

The same experimental procedure was repeated considering sludges with different percentages of residual dry matter following Step A of partial evaporation, as summarized in Table 1:

Table 1: Process carried out on batches of sludge having different percentages of dry matter upon exiting the dehydration unit (that is, following Step A).

|  | % of dry matter following Step A | Ratio by weight Lime/dry matter (Step B) | Final water content in the inert sludge (following Step B) |
|---|---|---|---|
| 1 | 35% | 1:1 | 5% |
| 2 | 25% | 1.5:1 | 7% |
| 3 | 18% | 2:1 | 9% |

As can be noted, the results obtained from batch trials demonstrate that the industrial application of this invention to a plant for continuous processing can be conveniently implemented, reaching levels of residual water equal to at least 5% or even less. In fact, the characteristics of continuous processing allow for optimization of the experimental parameters of the process (such as temperature, time and amounts added for example), making it possible to reach residual water levels even lower than 5%.

**Claims**

1.  A process for the preparation of inert sludge comprising the steps of:

    A. partial dehydration of the spent sludge resulting from water purification processes of a biological or physical-chemical type;
    B. treatment of the sludge obtained from step A, by means of the addition of lime at a ratio by weight ranging between 1:1 and 4:1, with respect to the amount of dry matter contained in the sludge obtained from Step A, so as to reach and maintain a constant temperature ranging between 100 and 110 °C, until obtaining a residual water content of less than or equal to 10%.

2. The process according to claim 1, wherein said residual water content of the sludge obtained following Step B is less than or equal to 6%.

3. The process according to any one of claims 1-2, wherein Step A is carried out by means of a belt press, a filter press or, preferably, a centrifuge.

4. The process according to any one of claims 1-3, wherein the material following Step A has a content of dry matter of at least 10%, preferably ranging between 15 and 40%.

5. The process according to any one of claims 1-4, wherein the lime being added in Step B is added at a rate within the range of 50 Kg/hour to 1000 Kg/hour.

6. The process according to any one of the preceding claims, wherein lime is added at a ratio by weight within the range of 1:1 to 2:1, with respect to the amount of dry matter.

7. The process according to any one of claims 1-6, wherein the partially dewatered material from Step A has a percentage of residual dry matter equal to 25% by weight, and is treated with lime at a ratio of 1.5:1, at a constant temperature ranging between 100 and 105° C, until there is a residual water content of less than 6%.

8. The process according to any one of the preceding claims, wherein the pH of the partially dewatered sludgy material is greater than 10.

9. A use of lime for converting sludge derived from aerobic, anaerobic or physical-chemical purification processes into inert material.

Fig.1

EP 2 660 209 A1

**EUROPEAN SEARCH REPORT**

Application Number

EP 13 16 5970

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 5 405 536 A (CHRISTY PAUL G [US]) 11 April 1995 (1995-04-11) * column 4, line 35 - line 45 * * page 1, line 35 * * abstract * * column 5, line 44 - line 48 * ----- | 1-9 | INV. C02F11/12 C02F11/14 |
| X | US 2002/043500 A1 (MILLARD ROBIN [GB]) 18 April 2002 (2002-04-18) * paragraph [0057] - paragraph [0066]; figure 1 * ----- | 1-9 | |
| X | DE 10 2009 021165 B3 (LOEWE FUERSTENBERG ARMAND [DE]) 4 November 2010 (2010-11-04) * abstract; figure 1 * * paragraph [0007] - paragraph [0012] * * paragraph [0030] * ----- | 1-9 | |
| A | EP 0 027 910 A1 (KUEBLER HANS) 6 May 1981 (1981-05-06) * paragraphs [0017], [0025]; claim 1 * ----- | 1-9 | TECHNICAL FIELDS SEARCHED (IPC) C02F |

The present search report has been drawn up for all claims

| Place of search | Date of completion of the search | Examiner |
|---|---|---|
| The Hague | 29 August 2013 | González Arias, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

8

**ANNEX TO THE EUROPEAN SEARCH REPORT
ON EUROPEAN PATENT APPLICATION NO.**

EP 13 16 5970

This annex lists the patent family members relating to the patent documents cited in the above-mentioned European search report.
The members are as contained in the European Patent Office EDP file on
The European Patent Office is in no way liable for these particulars which are merely given for the purpose of information.

29-08-2013

| Patent document cited in search report | | Publication date | Patent family member(s) | | Publication date |
|---|---|---|---|---|---|
| US 5405536 | A | 11-04-1995 | US | 5405536 A | 11-04-1995 |
| | | | US | 5433844 A | 18-07-1995 |
| US 2002043500 | A1 | 18-04-2002 | NONE | | |
| DE 102009021165 | B3 | 04-11-2010 | DE 102009021165 B3 | | 04-11-2010 |
| | | | EP | 2429974 A1 | 21-03-2012 |
| | | | WO | 2010130276 A1 | 18-11-2010 |
| EP 0027910 | A1 | 06-05-1981 | DE | 2940045 A1 | 07-05-1981 |
| | | | EP | 0027910 A1 | 06-05-1981 |

EPO FORM P0459

For more details about this annex : see Official Journal of the European Patent Office, No. 12/82